## Europäisches Patentamt
## European Patent Office
## Office européen des brevets

(19)

(11) Veröffentlichungsnummer : **0 303 558 B1**

(12)

# EUROPÄISCHE PATENTSCHRIFT

(45) Veröffentlichungstag der Patentschrift :
**11.03.92 Patentblatt 92/11**

(51) Int. Cl.$^5$ : **F16C 35/02, F16C 35/06**

(21) Anmeldenummer : **88730174.5**

(22) Anmeldetag : **05.08.88**

(54) **Lager für Achsen oder Wellen, insbesondere in elektrischen Büromaschinen.**

(30) Priorität : **13.08.87 DE 3727286**

(43) Veröffentlichungstag der Anmeldung :
**15.02.89 Patentblatt 89/07**

(45) Bekanntmachung des Hinweises auf die
Patenterteilung :
**11.03.92 Patentblatt 92/11**

(84) Benannte Vertragsstaaten :
**AT BE CH DE FR GB IT LI NL**

(56) Entgegenhaltungen :
**DE-A- 2 419 976**
**FR-A- 2 566 857**
**GB-A- 2 062 126**
**IBM THECHNICAL DISCLOSURE BULLETIN**
**Band 26, Nr. 6, November 1983, Seite 2702,**
**New York, USA; M. J. GALATHA et al.: "Snap-**
**in bearing block for shaft mounting"**

(73) Patentinhaber : **MANNESMANN**
**Aktiengesellschaft**
**Mannesmannufer 2**
**W-4000 Düsseldorf 1 (DE)**

(72) Erfinder : **Steppe, Erich**
**Kelternweg 51**
**W-7900 Ulm (DE)**

(74) Vertreter : **Presting, Hans-Joachim, Dipl.-Ing.**
**et al**
**Patentanwälte Meissner & Presting**
**Herbertstrasse 22**
**W-1000 Berlin 33 West (DE)**

## Beschreibung

Die Erfindung betrifft ein Lager für Achsen oder Wellen, insbesondere in elektrischen Büromaschinen, dessen Lagerkörper in einem Flächenbauteil leicht montierbar bzw. demontierbar angeordnet ist, wobei von einer Randkante des Flächenbauteils ausgehend eine länglich geformte Lagerausnehmung mit parallelen Breitenkanten und mit einer quer zur Montagerichtung verlaufenden Aussparung gebildet ist und wobei der Lagerkörper im wesentlichen aus einer Lagernabe besteht, an die mehrere parallel zu den Breitenkanten überwiegend in Richtung der Lagerachse federnde Ausleger angeschlossen sind, von denen einer lösbar in die Aussparung einrastbar ist.

Ein Lager dieser Art ist aus der GB-A-2 062 126 bekannt. Derartige und ähnlich ausgebildete Lager werden als Metall- oder Kunststoff-Buchsen in Achsrichtung in Wandplatinen, Seitenwände u.dgl. von Matrixdruckern eingesetzt und durch besondere Mittel verriegelt, wobei die Verriegelungen häufig den Nachteil aufweisen, daß sie sich durch Beschleunigungskräfte, die beim Transportieren entstehen oder durch Erschütterungen während des Transports entriegeln können.

Die bekannten Lager sind jedoch auch unwirtschaftlich in der Herstellung und bei der Montage. Für den Montagevorgang sind meist drei Bewegungsrichtungen notwendig, so daß die Montage ausschließlich per Hand erfolgen muß.

Die wirtschaftliche Entwicklung, Preisdruck und Wettbewerb zwingen neuerdings die Hersteller elektrischer Büromaschinen zu Überlegungen, derartige Lager automatisch zu montieren.

Es ist jedoch kein Lager bekannt, das von seiner Gestaltungsseite her automatisch montiert werden könnte.

Der Erfindung liegt daher die Aufgabe zugrunde, ein Lager zu schaffen, das wirtschaftlich herstellbar ist, das leicht, d.h. automatisch, montierbar ist, trotzdem sicher in seinem Flächenbauteil sitzt (selbstsichernd ist) und im Service-Fall trotzdem noch lösbar, und zwar sehr einfach ausbaubar ist.

Die gestellte Aufgabe wird erfindungsgemäß dadurch gelöst, daß

– in den Breitenkanten der Lagerausnehmung je eine Aussparung vorgesehen ist,
– die Ausleger in Richtung der Lagerachse federn,
– die Ausleger mit Einrastschrägen versehen sind, wobei jeweils einer Aussparung eine Einrastschräge zugeordnet ist und
– die Einrastschrägen so angeordnet sind, daß sie sich nach Einbau des Lagers auf verschiedenen Seiten des Flächenbauteils diagonal gegenüberliegen.

Dieses Lager ist nicht nur wirtschaftlich herstellbar, weil es außer der Lagerausnehmung im Flächenbauteil aus nur einem Stück (dem Lagerkörper) bestehen kann, es ist außerdem auch leicht montierbar, weil dazu nur eine Bewegung in einer Bewegungsrichtung erforderlich ist. Der Lagerkörper ist durch die Einrastbarkeit selbstsichernd und kann sich während des Transports nicht lösen. Im Service-Fall genügt das Lösen der Rastmittel, um ein Demontieren zu bewerkstelligen.

Das Einschieben des Lagerkörpers in die Lagerausnehmung des Flächenbauteils kann ferner dadurch zum Flächenbauteil genau durchgeführt werden, indem am Umfang der Lagernabe des Lagerkörpers, beiden Flächenseiten des Flächenbauteils zugeordnete, im Toleranzbereich der Dicke des Flächenbauteils gehaltene Führungsstege vorgesehen sind.

Das Lösen des Lagerkörpers wird dadurch begünstigt, daß an den federnden Auslegern des Lagerkörpers Bohrungen oder Zapfen für ein Montage-Werkzeug befestigt sind.

Die automatische Montage wird unterstützt, indem nach weiteren Merkmalen an den federnden Auslegern des Lagerkörpers parallel zur Lagerachse

Bohrungen oder Zapfen für ein Montage-Werkzeug befestigt sind.

Die Erfindung zielt besonders auf die Verwendung des Lagers für die Schreibwalze oder den Druckbalken eines Matrixdruckers.

In der Zeichnung sind Ausführungsbeispiele der Erfindung schematisch dargestellt und werden nachfolgend näher erläutert. Es zeigen:

Fig. 1 eine zergliederte Darstellung des Lagers in Perspektive,

Fig. 2 eine Draufsicht auf das Lager während der automatischen Montage und

Fig. 3 eine Draufsicht auf das Lager während des Lösens des Lagerkörpers im Service-Fall.

Das Lager wird im Fall des Ausführungsbeispiels für einen Matrixdrucker eingesetzt. Der Flächenbauteil 1 stellt daher eine Seitenwand, eine Deckenplatte, eine Rückwand, eine Bodenplatte, eine Zwischenplatte oder dgl. dar. In dieses Flächenbauteil 1 wird der Lagerkörper 2 für die Lagerung einer Schreibwalze 3 oder eines Druckbalkens 3a verwendet. Die hierzu erforderlichen Montagerichtungen sind mit 4 für das Einschieben des Lagerkörpers 2 und mit 5 für das Einstecken der Schreibwalze 3 bezeichnet.

Das Flächenbauteil 1 weist ausgehend von einer Randkante 1a eine Länglich geformte Lagerausnehmung 6 auf. Diese zeigt parallele Breitenkanten 7 und 8. Die Breitenkanten 7,8 sind durch quer zur Montagerichtung 4 verlaufende Aussparungen 9 und 10 unterbrochen. Die jeweils obere Begrenzungskante 11 wird für das noch zu beschreibende Rastmittel am Lagerkörper 2 benötigt. Die Begrenzungskante 11 steht daher maßlich mit der unteren Begrenzung 12 in einem wichtigen Zusammenhang, um nämlich eine Spannkraft beim Einrasten des Lagerkörpers zu erzielen.

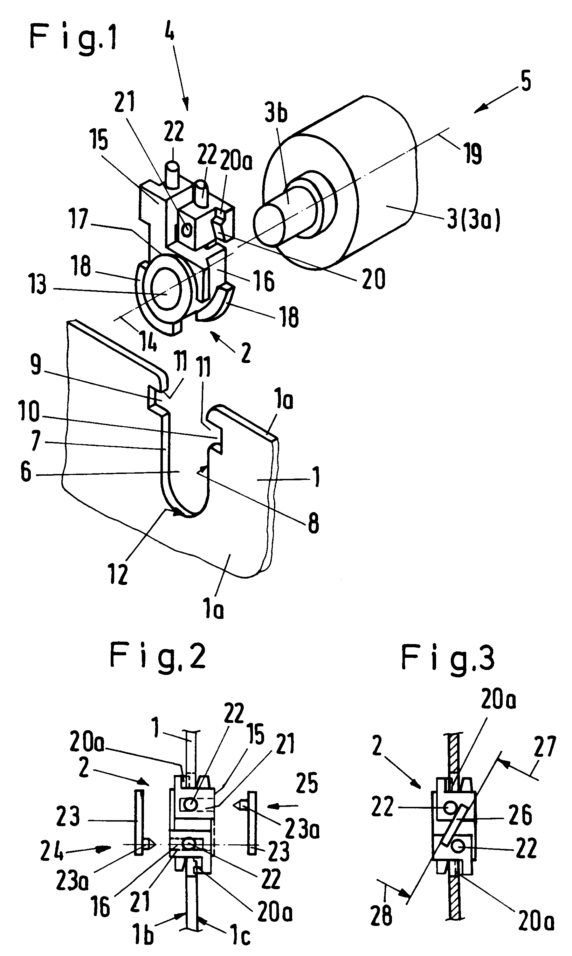

Der Lagerkörper 2 ist im dargestellten Ausführungsbeispiel aus der Lagernabe 13 mit einer Passungsbohrung für die Druckwalzenwelle 3b und aus senkrecht zur Lagerachse 14 verlaufenden, etwa parallel zur Lagerachse 14 federnde Ausleger 15 und 16 zusammengesetzt. Die Ausleger 15 und 16 sind lösbar in die Aussparungen 9 und 10 einrastbar, wobei die bereits erwähnte Begrenzungskante 11 im Abstand zur Begrenzung 12 die Haltekraft beim Rasten bestimmt. Am Umfang 17 der Lagernabe 13 auf beiden Flächenseiten 1b und 1c (Fig. 2) sind Führungsstege 18 angebracht. Die Führungsstege 18 können pro Flächenseite 1b bzw. 1c am Umfang 17 versetzt sein, um eine plane, axiale Festlegung des Lagerkörpers 2 zum Flächenbauteil 1 zu gewährleisten, so daß die Lagerachse 14 des Lagerkörpers 2 mit der Achse 19 der Schreibwalze 3 oder eines Druckbalkens 3a genau zusammenfällt.

Die Verriegelung des Lagerkörpers 2 erfolgt über an den Auslegern 15 und 16 in Fig. 1 deutlich sichtbare Einrastschrägen 20, die etwa in der Form eines Klingengesperre-Zahnes am Lagerkörper 2 vorgesehen sind. Beim Einrasten springt daher die Einrastschräge 20 mit ihrer oberen horizontalen Fläche 20a unter die Begrenzungskante 11, wobei eine Druckspannung im Lagerkörper 2 erzeugt wird. Das Einrasten erfolgt, wie in Fig. 1 zu sehen ist, in die Mantagerichtung 5.

An den sich wie eine Biegefeder verhaltenden Auslegern 15 und 16 des Lagerkörpers 2 sind Bohrungen 21 oder Zapfen 22 angeordnet. Gemäß Fig. 2 wird die automatische Montage durch in die Bohrungen 21 greifende Montage-Werkzeuge 23 bewirkt, die eine geringe Biegekraft in die Richtungen 24 und 25 ausüben, den Lagerkörper 2 in die Montagerichtung 4 absenken, aus den Bohrungen 21 herausfahren, wonach die automatische Montage beendet ist. Selbstverständlich weist das Montage-Werkzeug 23 in die Bohrungen 21 passende Vorsprünge 23a auf.

Gemäß Fig. 3 wird der Demontage-Vorgang anläßlich eines Service-Falles deutlich: Zwischen die Zapfen 22 wird die Klinge eines Schraubendrehers als Montage-Werkzeug 26 angesetzt und verdreht, wodurch die obere horizontale Fläche 20a der Einrastschräge 20 ausklinkt. Die Demontage-Richtungen sind mit 27 und 28 bezeichnet.

## Patentansprüche

1. Lager für Achsen oder Wellen, insbesondere in elektrischen Büromaschinen, dessen Lagerkörper (2) in einem Flächenbauteil (1) leicht montierbar bzw. demontierbar angeordnet ist, wobei von einer Randkante (1a) des Flächenbauteils (1) ausgehend eine länglich geformte Lagerausnehmung (6) mit parallelen Breitenkanten (7, 8) und mit einer quer zur Montagerichtung (4) verlaufenden Aussparung gebildet ist und wobei der Lagerkörper (2) im wesentlichen aus einer Lagernabe (13) besteht, an die mehrere parallel zu den Breitenkanten (7, 8) überwiegend in Richtung der Lagerachse (14) federnde Ausleger (15, 16) angeschlossen sind, von denen einer lösbar in die Aussparung einrastbar ist,
dadurch gekennzeichnet, daß
   – in den Breitenkanten (7, 8) der Lagerausnehmung (6) je eine Aussparung (9 bzw. 10) vorgesehen ist,
   – die Ausleger (15, 16) in Richtung der Lagerachse (14) federn,
   – die Ausleger (15, 16) mit Einrastschrägen (20) versehen sind, wobei jeweils einer Aussparung (9, 10) eine Einrastschräge (20) zugeordnet ist und
   – die Einrastschrägen (20) so angeordnet sind, daß sie sich nach Einbau des Lagers auf verschiedenen Seiten des Flächenbauteils (1) diagonal gegenüberliegen.
   2. Lager nach Anspruch 1,
dadurch gekennzeichnet,
daß am Umfang (17) der Lagernabe (13) des Lagerkörpers (2), beiden Flächenseiten (1b, 1c) des Flächenbauteils (1) zugeordnete, im Toleranzbereich der Dicke des Flächenbauteils (1) gehaltene Führungsstege (18) vorgesehen sind.
   3. Lager nach den Ansprüchen 1 und 2,
dadurch gekennzeichnet,
daß an den federnden Auslegern (15, 16) des Lagerkörpers (2) Bohrungen (21) oder Zapfen (22) für ein Montage-Werkzeug (26) befestigt sind.
   4. Lager nach den Ansprüchen 1 und 2,
dadurch gekennzeichnet,
daß an den federnden Auslegern (15, 16) des Lagerkörpers (2) parallel zur Lagerachse (14) Bohrungen (21)

EP 0 303 558 B1

oder Zapfen (22) für ein Montage-Werkzeug (23) befestigt sind.

5. Verwendung des Lagers nach einem oder mehreren der Ansprüche 1 bis 4 für die Schreibwalze (3) oder den Druckbalken (3a) eines Matrixdruckers.

**Claims**

1. A bearing for spindles or shafts, in particular in electric office machines, the bearing body (2) of which is arranged such that it can be easily mounted in and dismounted from a surface component (1), where, commencing from a peripheral edge (1a) of the surface component (1), an elongated bearing opening (6) with parallel broad sides (7 8) and a recess extending transversely to the direction of mounting (4) is formed, and where the bearing body (2) substantially comprises a bearing hub (13) to which are connected a plurality of projections (15, 16) which are resilient in parallel to the broad edges (7, 8) mainly in the direction of the bearing axis (14) and of which one can be detachably engaged into the recess,
characterised in that
– a respective recess (9, 10) is provided in each of the broad edges (7, 8) of the bearing opening (6),
– the projections (15, 16) are resilient in the direction of the bearing axis (14),
– the projections (15, 16) are provided with engaging sloping surfaces (20), where each recess (9, 10) is assigned a respective engaging sloping surface (20) and
– the engaging sloping surfaces (20) are arranged such that following the installation of the bearing they are arranged diagonally opposite one another on different sides of the surface component (1).

2. A bearing as claimed in Claim 1,
characterised in that
guide ribs (18) which are assigned to the two surface sides (1b, 1c) of the surface component (1) and which are kept within the tolerance range of the thickness of the surface component (1) are provided on the periphery (17) of the bearing hub (13) of the bearing body (2).

3. A bearing as claimed in Claim 1 and 2,
characterised in that
bores (21) or pins (22) for an assembly tool (26) are attached to the resilient projections (15, 16) of the bearing body (2).

4. A bearing as claimed in Claims 1 and 2,
characterised in that
bores (21) or pins (22) for an assembly tool (23) are attached to the resilient projections (15, 16) of the bearing body (2) in parallel to the bearing axis (14).

5. The use of the bearing claimed in one or several of Claims 1 to 4 for the platen (3) or the printing bar (3a) of a matrix printer.

**Revendications**

1. Palier pour des axes ou arbres, en particulier dans des machines électriques de bureau, dont le corps de palier (2) est agencé, de façon facilement montable ou démontable, dans une pièce plate (1), un logement de palier (6) de forme oblongue, comportant des bords en largeur parallèles (7,8) et un évidement s'étendant transversalement à la direction de montage (4), étant formé à partir d'un bord d'extrémité (1a) de la pièce plate (1), et le corps de palier (2) étant constitué essentiellement d'un moyeu de palier (13), auquel sont raccordés plusieurs bras (15,16) faisant ressort principalement en direction de l'axe (14) du palier parallèlement aux bords (7,8), desquels l'un peut être encliqueté de façon amovible dans l'évidement,
caractérisé en ce que :
– dans chaque bord (7,8) du logement de palier (6), est prévu un évidement (9,10),
– les bras (15,16) font ressort en direction de l'axe (14) du palier,
– les bras (15,16) sont munis de chanfreins d'encliquetage (20), un chanfrein d'encliquetage (20) étant associé, à chaque fois, à un évidement (9,10), et
– les chanfreins d'encliquetage (20) sont agencés de sorte qu'ils se font face en diagonale, après montage du palier, sur différentes faces de la pièce plate (1).

2. Palier selon la revendication 1,
caractérisé en ce que,
à la périphérie (17) du moyeu (13) du corps de palier (2), sont prévues des barrettes de guidage (18) maintenues dans la zone de tolérance de l'épaisseur de la pièce plate (1), et associées aux deux faces (1b,1c) de la pièce plate (1).

3. Palier selon les revendications 1 et 2,
caractérisé en ce que,
sur les bras élastiques (15,16) du corps de palier (2), sont fixés des perçages (21) ou des tourillons (22) pour un outil de montage (26).

4. Palier selon les revendications 1 et 2,
caractérisé en ce que,
sur les bras élastiques (15,16) du corps de palier (2), parallèlement à l'axe (14) du palier, sont fixés des perçages (21) ou des tourillons (22) pour un outil de montage (23).

5. Utilisation du palier selon une ou plusieurs des revendications 1 à 4 pour le cylindre d'impression (3) ou la barre d'impression (3a) d'une imprimante à matrice.

Fig.1

Fig.2          Fig.3